# EUROPÄISCHE PATENTSCHRIFT

(11) **EP 2 218 541 B1**
(45) Veröffentlichungstag und Bekanntmachung des Hinweises auf die Patenterteilung: **21.12.2011**
(21) Anmeldenummer: 10159920.7
(22) Anmeldetag: 16.10.2009
(51) Int. Cl.: B23Q 1/00, B23Q 17/00

(54) **Schnellspannzylinder mit Anwesenheitskontrolle des Einzugsnippels**
Quick clamping cylinder with check that the feeder fitting is present
Cylindre de serrage rapide doté d'un contrôle de présence du raccord d'insertion

(30) Priorität: 18.10.2008 DE 102008052270
(43) Veröffentlichungstag der Anmeldung: 18.08.2010
(62) Teilanmeldung aus: 09173255.2
(73) Patentinhaber: Andreas Maier GmbH & Co. KG, 70734 Fellbach (DE)
(72) Erfinder: Stark, Günther, 6972, Fußach (AT)
(74) Vertreter: Hoeger, Stellrecht & Partner Patentanwälte

(56) Entgegenhaltungen:
- EP-A1- 2 052 808
- EP-A2- 1 175 959
- DE-A1-102005 052 780

## Beschreibung

Schnellspannzylinder mit Verriegelungskontrolle sind aus dem Stand der Technik bereits schon bekannt. Es wird hierbei auf die Offenbarung der DE 103 17 350 A1 hingewiesen, die vollinhaltlich von der vorliegenden Erfindung umfasst sein soll.

Die dortige Verriegelungskontolle dient zur Überprüfung, ob der Schnellspannzylinder offen ist, die Verriegelungskörper gelöst sind und der Einzugsnippel aus dem Gehäuse des Schnellspannzylinders herausgezogen sind.

Bei derartigen Schnellspann-Zylindern, jedoch auch bei Schnellspann-Zylindern mit anderem Aufbau (z. B. nach der DE 101 23 268 A1) besteht der Nachteil, dass der Verriegelungszustand des Einzugsnippels im Schnellspann-Zylinder nicht überprüft werden kann. Er ist optisch nicht kontrollierbar, weil das Gehäuse des Schnellspannzylinders an seiner Oberseite durch die Werkstückpalette abgedeckt ist, und es kann deshalb nicht geprüft werden, ob der Einzugsnippel ordnungsgemäß in die Aufnahmebohrung im Zylindergehäuse eingefahren ist und sich dort in Verriegelungseingriff mit den Verriegelungskörpern befindet. Insbesondere kann auch nicht geprüft werden, ob überhaupt ein Einzugsnippel vorhanden ist.

Derartige Schnellspannzylinder sind deshalb nicht eigensicher.

Die auf den gleichen Anmelder zurückgehende DE 10 2005 052 780 A1 löst dieses Problem, indem im Verschiebungsweg des Federpaketes des Schnellspannzylinders ein Betätigungselement angeordnet ist, welches den Durchfluss eines Mediums durch eine zugeordnete Kontrollleitung überwacht und die Kontrollleitung schließt, solange der Einzugsnippel noch nicht in den Innenraum des Schnellspannzylinders eingefahren und dort verriegelt ist. Wenn jedoch der Einzugsnippel in den Innenraum des Schnellspannzylinders eingefahren und dort mit Hilfe der Verriegelungskörper verriegelt ist, öffnet das bekannte Betätigungselement, und es findet ein Kontrollfluss durch die angeschlossene Kontrollleitung statt. Der Kontrollfluss eines dort fließenden Mediums (Ölluft oder Gas) wird überwacht und als Verriegelungskontrolle für den verriegelten Einzugsnippel herangezogen.

Ein solches System hat sich im großen Umfang bewährt, und die vorliegende Erfindung baut auf dieser Technik auf, so dass in der folgenden Beschreibung alle gleichen Teile mit den gleichen Bezugszeichen gemäß der älteren DE 10 2005 052 780 A1 bezeichnet sind.

Im Übrigen wird auf den Offenbarungsgehalt dieser Druckschrift Bezug genommen, der vollinhaltlich von dem Offenbarungsgehalt der vorliegenden Erfindungsbeschreibung umfasst sein soll.

Es besteht zunehmend das Bedürfnis, nicht nur eine Verriegelungskontrolle des Einzugsnippels beim Einfahren und Verriegeln im Schnellspannzylinder vorzusehen, sondern darüber hinaus auch noch eine Kontrolle über die Anwesenheit des Einzugsnippels im Gehäuse des Schnellspannzylinders.

Es wurde nämlich als nachteilig erkannt, dass das Betätigungselement nach der älteren DE 10 2005 052 780 A1 nur indirekt vom Einzugsnippel betätigt wird, nämlich genau genommen vom Verriegelungskolben, der seinerseits über Öldruck gegen das Federpaket wirkt. Ob nun der Einzugsnippel mit dem Verriegelungskolben zusammenarbeitet und auch richtig mit den Verriegelungskörpern verrastet ist, kann mit dem Betätigungselement nach der älteren DE 10 2005 052 780 A1 jedoch nicht überprüft werden.

Die EP 2 052 808 A1, welche gemäß Artikel 54(3) EPÜ nur bei der Prüfung der vorliegenden Anmeldung auf Neuheit zu berücksichtigen ist, offenbart einen Schnellspannzylinder mit Kontrolle der Funktion des Einzugsnippels beim Einspannen des Einzugsnippels im Schnellspannzylinder, umfassend ein Gehäuse und einen das Gehäuse abdeckenden Deckel, welcher eine zentrale Ausnehmung zur Aufnahme des an der Unterseite einer Werkstückpalette angeordneten Einzugsnippels aufweist,
wobei im Gehäuse eine federbelastete Verriegelung des Einzugsnippels mittels mehrerer Spannelemente erfolgt und eine Entriegelung mittels Verschiebung eines druckmittelbetätigten Kolbens erfolgt und wobei mittels einer Bohrung in den Spannelementen die Anwesenheit und der Verschiebungszustand des Einzugsnippels im Gehäuse des Schnellspannzylinders erfasst werden.

Der vorliegenden Erfindung liegt die Aufgabe zugrunde, eine Kontrollmöglichkeit über die richtige Verrastung des Einzugsnippels im Gehäuse des Schnellspannzylinders im verriegelten Zustand zu gewährleisten.

Zur Lösung der gestellten Aufgabe ist die Erfindung durch die technische Lehre des Anspruches 1 gekennzeichnet.

Das Betätigungselement wird federbelastet von dem Einzugsnippel betätigt, wenn der Einzugsnippel in das Gehäuse des Schnellspannzylinders eingefahren und mit den Verriegelungskörpern verrastet ist.

Die Erfindung verwendet bei der Bezugnahme auf die ältere, vorveröffentlichte DE 10 2005 052 780 A1 nun nicht mehr den eingeschränkten Begriff "Kontrollventil", sondern den allgemeineren Begriff "Betätigungselement" oder "Schaltelement". Es wurde nämlich - als Teil der vorliegenden Erfindung erkannt -, dass nicht nur ein fluidisch betätigtes Betätigungselement (als erstes und/oder zweites Betätigungselement) verwendet werden kann, sondern jedes beliebige Betätigungselement, sei es nun ein kontaktloser oder kontaktbehafteter Schalter, der wegeabhängig geschaltet wird.

Deshalb wird in der folgenden Ausführungsbeschreibung zwar ein Ausführungsbeispiel mit einen Fluidstrom überwachenden Kontrollventilen dargestellt. Hierauf ist die Erfindung jedoch nicht beschränkt. Wie oben ausgeführt - kann anstelle der beiden oder eines der beiden Kontrollventile - auch ein kontaktlos oder kontaktbehafteter Näherungsschalter verwendet werden. Dieser überwacht natürlich keinen Kontrollfluss, sondern einen Signalfluss. Aus diesem Grund sind die Begriffe Kontrollfluss" und "Signalfluss" als gleichwertig zu verstehen und sind in der gesamten Beschreibung gegeneinander austauschbar.

Damit ergibt sich der wesentliche Vorteil, dass nur zwei hintereinander geschaltete Betätigungselemente mehr Informationen über den Zustand des Schnellspannzylinders bieten als vergleichsweise das eine Betätigungselement nach der älteren Patentanmeldung DE 10 2005 052 780 A1.

Mit der Anwesenheit des zweiten Betätigungselements, welches im Mediumdurchfluss (oder elektrischen Signalfluss) dem ersten Betätigungselement vorgeschaltet ist, wird nämlich zunächst festgestellt, ob der Einzugsnippel überhaupt in seiner Verriegelungsposition in das Gehäuse des Schnellspannzylinders eingefahren ist.

Das erfindungsgemäße zweite Betätigungselement überwacht also die Anwesenheit des Einzugsnippels im Gehäuse des Schnellspannzylinders im verriegelten Zustand, während das erste - bekannte - Betätigungselement überwacht, ob der Schnellspannzylinder geöffnet ist. Ein geöffneter Schnellspannzylinder bedeutet, dass das Federpaket komprimiert ist und der Venriegelungskolben unter Drucköl nach unten gegen das Federpaket gefahren ist.

Nur wenn dieser Zustand vom ersten Betätigungselement festgestellt wurde, ist damit eine Aussage getroffen, dass der Schnellspannzylinder geöffnet ist und bereit ist, einen Einzugsnippel aufzunehmen.

In diesem Zustand (wenn also das zweite Betätigungselement den geöffneten Zustand des Schnellspannzylinders anzeigt), kann der Einzugsnippel in das Gehäuse des Schnellspannzylinders einfahren und betätigt das zweite Betätigungselement, welches einen Teilfluss -oder ein Signal - durch die Kontroll- oder Signalleitung freigibt. In diesem Zustand ist jedoch das erste (bekannte) Betätigungselement noch geschlossen, weil das Federpaket auf das Ventil drückt und anzeigt, dass die Verriegelung noch nicht stattgefunden hat.

In diesem Zustand wird das Drucköl von dem Verriegelungskolben entfernt, der damit unter der Einwirkung des Federpaketes nach oben verschoben wird und die Verriegelungskörper in Eingriff mit dem eingefahrenen Einzugsnippel bringt.

In diesem Augenblick ist das erste Betätigungselement freigeschaltet und gibt nun - weil auch das zweite Betätigungselement freigeschaltet ist - einen vollkommenen Öldurchfluss von der Einlaufseite zur Auslaufseite der Kontrollleitung frei.

Damit kann nun die Aussage getroffen werden, dass der Einzugsnippel korrekt in das Gehäuse des Schnellspannzylinders eingefahren ist und dass zusätzlich der Einzugsnippel auch noch verriegelt ist.

Mit der gegebenen technischen Lehre können also zwei unterschiedliche Aussagen über die Funktionen verschiedener Teile des Schnellspannzylinders getroffen werden. Einmal kann der Zustand des Einzugsnippels im Schnellspannzylinder überprüft werden und zum Zweiten kann der Zustand der Verriegelungseinrichtung, bestehend aus dem Verriegelungskolben, dem dazugehörenden Drucköl, den Verriegelungskörpern und dem dazugehörenden Federpaket mit Hilfe des ersten Betätigungselements überprüft werden.

Eine solche doppelte Überwachung wird bevorzugt für Maschinen eingesetzt, wo die bekannten Schnellspannzylinder auf schnell drehenden Werkstückträgern verwendet werden. Hierbei kann es vorkommen, dass solche drehenden Werkstückträger tonnenschwere Werkstücke tragen und mit Umdrehungen von mehr als 1.000 Umdrehungen pro Minute rotieren. In diesem Fall ist es unbedingt notwendig, sicherzustellen, dass der Einzugsnippel auch korrekt in das Gehäuse des Schnellspannzylinders eingefahren ist und dort auch verriegelt ist, Oder dass der Einzugsnippel (als einer unter mehreren) überhaupt vorhanden ist.

Es konnte nämlich zu Störungen im Betriebsablauf dadurch kommen, dass eine Bedienungsperson unbemerkt einen Einzugsnippel von einer Werkstückpalette abschraubte und entfernte. Damit wurde unbemerkt die Tragkraft der gesamten Vorrichtung entscheidend geschwächt.

Um erhöhten Sicherheitsanforderungen zu genügen, ist es nun deshalb zusätzlich vorgesehen, die Anwesenheit von Einzugsnippeln bei Werkstückpaletten zu überprüfen.

Ferner konnte es vorkommen, dass beim Transport einer solchen Werkstückpalette eine oder mehrere der Einzugsnippel, die an der Unterseite der Werkstückpalette angeschraubt sind, abgeschert wurden, wodurch beim nachfolgenden Einspannen dieser Werkstückpalette auf den entsprechenden mehrfach vorhandenen Schnellspannzylindem das Fehlen eines Einzugsnippels nicht festgestellt werden konnte. Hier setzt die Erfindung ein, die das erfindungsgemäße zweite Betätigungselement zur Überprüfung der Anwesenheit des Einzugsnippels vorsieht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schnitt durch einen Schnellspannzylinder mit nur teilsweise eingefahrenem Einzugsnippel im geöffneten Zustand
- Figur 2:: Schnitt durch den gleichen Schnellspannzylinder im verriegelten Zustand mit eingefahrenem Einzugsnippel
- Figur 3:: vergrößerte Darstellung des bekannten ersten Betätigungselements
- Figur 4:: vergrößerte Darstellung des efindungsgemäßen zweiten Betätigungselements im Schließzustand
- Figur 5:: die gleiche Darstellung wie Figur 4 im Öffnungszustand

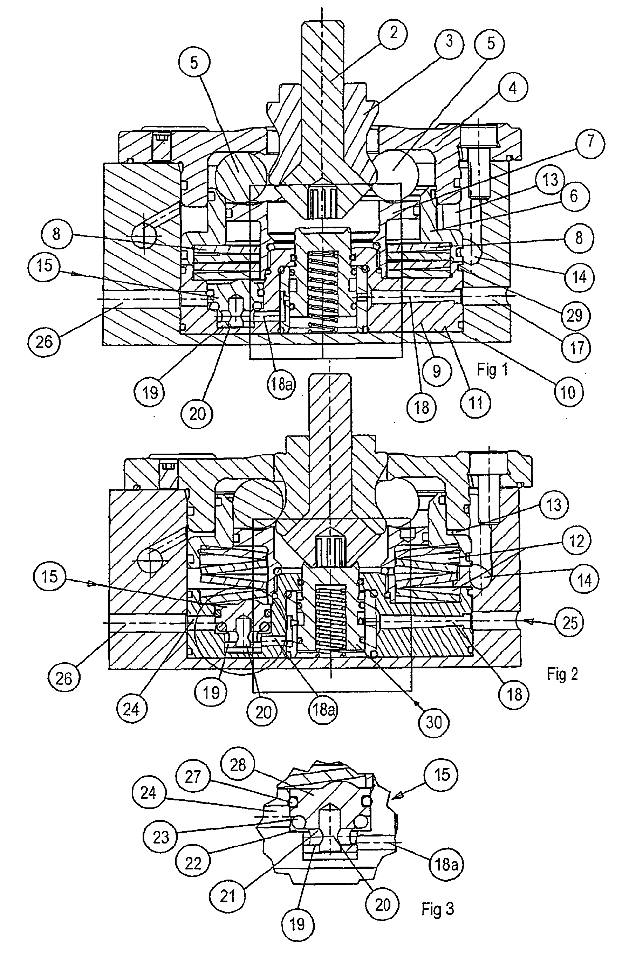

In Figur 1 und 2 ist dargestellt, dass eine Werkstückpalette 1 mit einer oder mehreren Fangschrauben 2 verbunden ist und jede Fangschraube 2 einen Einzugsnippel 3 trägt, der das Verriegelungselement für den Schneltspannzylinder darstellt.

Im verriegelten Zustand greift der Einzugsnippel 3 in die zentrale Mittenbohrung des Schnellspannzylinders 1 ein, wobei er durch eine entsprechende Mittenbohrung im Deckel 4 hindurchgreift.

Im Verriegelungskörper 5, die in formschlüssigem Eingriff mit dem Einzugsnippel 3 kommen, sind hier Kugeln dargestellt. Es können selbstverständlich auch jede andere Art von Verriegelungskörpern (z. B. Walzen, Ovalkörper oder dergleichen) verwendet werden.

Die Verriegelungskörper 5 werden unter der Kraft eines Verriegelungskolbens 6 in ihre Position am Einzugsnippel 3 formschlüssig gepresst.

Hierzu wird in einem Druckraum 13 über einen Druckanschluss 14 ein Druckmedium - bevorzugt ein Drucköl - eingeleitet, was den Verriegelungskolben 6 entgegen der Kraft eines Federpaketes 8 nach unten presst.

Damit wird die Verriegelungseinrichtung gemäß Figur 2 geöffnet.

In der verriegelten Stellung der Figur 1 ist der Druckraum 13 praktisch drucklos, so dass die Verriegelungskörper 5 unter der Kraft des Federpaketes 8 gegen ihren formschlüssigen Sitz am Einzugsnippel 3 gepresst werden.

Der gesamte Schnellspann-Zylinder weist ein topfartiges Gehäuse 10 auf, in dessen Einbaubohrung 11 ein Zylinderboden 9 eingesetzt ist.

Im Bereich dieses Zylinderbodens 9 ist nun das erfindungsgemäße Betätigungselement 15 angeordnet, welches den Verschiebungsweg des Federpaketes 8 überwacht.

Zu diesem Zweck ist im Gehäuse 10 seitlich ein Kontrollanschluss 17 vorhanden, in den in Pfeilrichtung 25 ein Kontrollmedium eingespeist wird. Es wird bevorzugt ebenfalls ein Drucköl verwendet, wie es auch für den Druckanschluss 14 Verwendung findet.

Der Kontrollanschluss 17 im Gehäuse 10 mündet über eine entsprechende Übergangsbohrung in eine im Zylinderboden eingelassene Kontrollbohrung 18, die an die Unterseite des Betätigungselements 15 herangeführt ist.

Im gezeigten Zustand ist das Betätigungselement 15 geöffnet, weil ein im Führungsfuß 19 angeordneter Durchlass 20 mit einer Querbohrung 21 verbunden ist, die flüssigkeitsleitend mit einem Spalt 22 verbunden ist, der sich unterhalb der Dichtung 23 in Richtung zu der auswärtsführenden Kontrollbohrung 24 ergibt.

Das Kontrollmedium fließt demzufolge über die Kontrollbohrung 24 aus dem Kontrollauslass 26 heraus und wird dort in seinem Durchfluss überwacht.

Sobald ein Durchfluss vorliegt, ist dies ein Zeichen dafür, dass die Verriegelungseinrichtung sich in voll verriegeltem Zustand nach Figur 2 befindet.

Es wird noch angefügt, dass auf dem Zylinderboden 9 eine Gewindebohrung für das Einschrauben einer Montageschraube 16 vorhanden ist, welche die Kugelauflage 7 mit dem Zylinderboden 9 verbindet.

Wichtig ist, dass der Federraum 12 von keinem Medium durchflossen ist, insbesondere auch nicht druckölbeaufschlagt ist. Er ist vollkommen leer, und deshalb kann das Betätigungselement 15 die Verschiebung des Federpaketes 8 überwachen, ohne dass es durch eindringendes Druckmedium unbeabsichtigt betätigt wird.

Das Betätigungselement 15 hat eine obere Dichtung 27, mit der es abdichtend in einer Längsbohrung im Zylinderboden gehalten ist und hierbei mit seiner Oberseite an einem Anschlag 47 der Kugelauflage 7 anschlägt.

Die Montageschraube 16 hält die drei Teile, nämlich Kugelauflage 7, Betätigungselement 15 und Zylinderboden 9 zusammen.

Das Betätigungselement 15 ist unmittelbar als Ventilstößel 28 ausgebildet, so dass ein Druck auf den oberen Ventilstößel 28 zu einer Verschiebung des Führungsfußes 19 in der Querbohrung führt.

Dies ist in Figur 2 dargestellt.

Sobald die Verriegelungseinrichtung außer Eingriff kommt, drückt das Federpaket 8 den Ventilstößel 28 nach unten, und der Führungsfuß 19 legt sich dichtend in die Kontrollbohrungen 18, 24 ein. Es ist somit der Durchlass 20 verschlossen, weil der Spalt 21 nicht mehr besteht, nachdem sich die Dichtung 23 auf den Durchlass gelegt hat.

Somit ist der Durchgang des Kontrollmediums in Pfeilrichtung 25 gemäß Figur 2 gesperrt, und dies wird als Signal gewertet, dass die Verriegelungseinrichtung außer Eingriff ist.

Wenn nun das Federpaket 8 gebrochen ist, stellt sich die Situation nach Figur 2 in der Weise ein, dass beim Zusammenschieben des Federpaketes durch den nach unten fahrenden Verriegelungskolben 6 das Federpaket 8 nicht mehr vollständig zusammengeschoben wird, sondern Spalte zwischen den einzelnen Federwindungen bleiben. Es reicht deshalb dann die Kraft des gebrochenen Federpaketes nicht mehr aus, den Ventilstößel 28 in seine Schließstellung nach Figur 2 zu bewegen.

Dies ist ein Zeichen für Federbruch, denn einerseits kann am Druckölanschluss 14 ein Druckölanstieg festgestellt werden und andererseits wird noch ein Durchfluss durch die Kontrollleitung 18, 24 festgestellt.

Diese beiden Kriterien sind dann ein Zeichen für Federbruch.

Es wird noch darauf hingewiesen, dass das Kontrollmedium in den Kontrollbohrungen 18, 24 auf den Führungsfuß 19 des Betätigungselements 25 in der Weise presst, dass es das Betätigungselement 15 in seine Offenstellung bringt und den Ventilstößel 28 stets an die Unterseite des Federpaketes anlegen lässt.

Ist das Federpaket gebrochen, dann hat das Drucköl soviel Kraft, das Betätigungselement 15 in seiner Offenstellung zu halten, ohne dass das Federpaket in der Lage wäre, das Betätigungselement in die Schließposition nach Figur 2 zu bringen.

Um die gesamte Kontrolleinrichtung mit den Anschlüssen 17 und 26 günstig einbauen zu können, ist vorgesehen, dass die beiden Kontrollbohrungen 18, 24 im Winkel von beispielsweise 30 Grad zueinander angeordnet sind und dazwischen eine Trenndichtung 29 vorgesehen ist, um die beiden Leitungen flüssigkeitsdicht voneinander zu trennen.

Es kann somit der gesamte Schnellspann-Zylinder in unterschiedlichen Drehlagen in einer zugeordneten Einbaubohrung 11 angeordnet werden, und hierbei ist dann immer ein Anschluss an die zugeordneten Kontrollanschlüsse 17 und 26 gegeben.

Nachfolgend wird nun die Funktion des zweiten Betätigungselements 30 näher beschrieben.

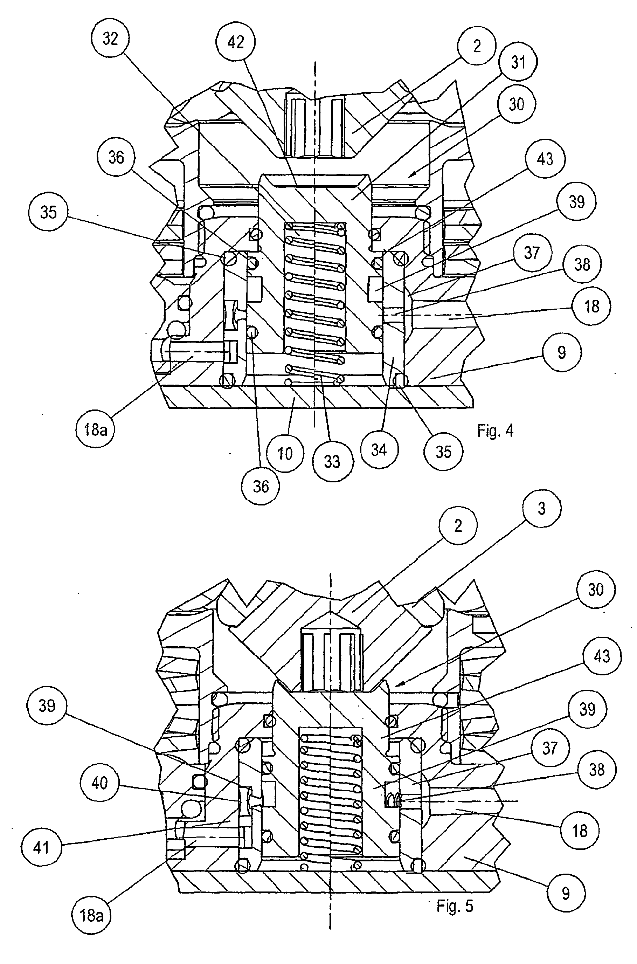

Aus Figur 4 und 5 ist erkennbar, dass das Betätigungselement im Wesentlichen aus einem etwa hülsenförmigen Ventilstößel 31 besteht, der einen Federraum 32 ausbildet, in dessen Innenraum eine Druckfeder 33 angeordnet ist, die sich mit ihrem einen Ende am Gehäuse 10 des Maschinentisches abstützt und mit ihrem anderen Ende sich an der Oberseite des Federraums 32 abstützt.

Damit ist der Ventilstößel 31 an einer Anschlagfläche 43 des Zylinderbodens 9 federbelastet gehalten.

Der Ventilstößel 31 ist unter der Last der Druckfeder 33 verschiebbar in einer Zylinderbuchse 34 gehalten, die ortsfest und unverschiebbar in dem Innenraum des Zylinderbodens 9 eingespannt ist.

Sie ist hierbei über die Dichtungen 35 an dem Zylinderboden 9 abgedichtet eingebaut und weist zusätzlich innere Dichtungen 36 auf, welche die abdichtende Lagerung zu dem dort verschiebbar gehaltenen Ventilstößel 31 erbringen.

In der gezeichneten Stellung nach Figur 4 ist die Kontrollfunktion dieses zweiten Betätigungselements 30 eingeschaltet, d. h., der Einzugsnippel 3 mit seiner am unteren Ende angeordneten Fangschraube 2 berührt noch nicht die Betätigungsfläche 42 an der Oberseite des Ventilstößels 31.

Somit ist ein Kontrollfluss durch die Kontrollleitung vom Kontrollanschluss 17 zum Kontrollauslauf 26 nicht möglich, weil sich das zweite Betätigungselement 30 in Sperrposition befindet. Dies ist aus Figur 4 erkennbar.

Es ist erkennbar, dass das Medium in der Kontrollbohrung 18 sich nur in eine Anfasung 37 erstreckt und dann in einen von der Anfasung ausgehenden Verbindungskanal 38 eintritt, wo es gesperrt ist. Es fehlt nämlich die Verbindung zwischen dem Verbindungskanal 38 und der zugeordneten Ringnut 39. Damit ist ein Durchlass durch dieses Betätigungselement 30 nicht gegeben.

Betätigt hingegen der Einzugsnippel 3 mit seiner am vorderen Ende angeordneten Fangschraube 2 die Betätigungsfläche 42 des Betätigungselements 30, so wird dieses entgegen der Kraft der Druckfeder 33 nach unten verschoben, wie dies in Figur 5 dargestellt ist. Es ist dann erkennbar, dass das Kontrollmedium aus dem Verbindungskanal 38 in die Ringnut 39 eintritt und an der gegenüberliegenden Seite über eine Vielzahl von Verteilerbohrungen 40 in eine Steignut 41 gelangt.

Die Steignut 41 ist flüssigkeitsleitend mit einem Teil der Kontrollbohrung 18 verbunden, der hier als Kontrollbohrung 18a bezeichnet wird.

Die Kontrollbohrung 18a führt unmittelbar flüssigkeitsleitend in den Einlass des nachgeschalteten ersten Betätigungselements 15 hinein.

Somit ist klargestellt, dass die beiden Betätigungselemente 15, 30 in Serie hintereinander geschaltet sind und von unterschiedlichen Teilen betätigt werden.

Wenn nun der Einzugsnippel 3 in das Gehäuse des Schnellspannzylinders einfährt, wie dies in Figur 2 dargestellt ist, jedoch die Spannsituation noch nicht hergestellt ist, wird zwar das zweite Betätigungselement 30 betätigt, nicht aber das erste Betätigungselement 15.

Dies wird erst dann betätigt, wenn die Verriegelungssituation im Übergang von Figur 1 zu Figur 2 hergestellt wird. Hierzu ist erforderlich, dass das Drucköl von dem Verriegelungskolben 6 entfernt wird und der Verriegelungskolben unter der Kraft des Federpaketes 8 nach oben verschoben wird, wodurch die Betätigungskraft auf das erste Betätigungselement 15 entfällt, dieses nach oben verschoben wird und in seine Offenstellung gelangt, wie dies in Figur 3 dargestellt ist. Das Druckmedium fließt dann durch den geringen sich nun ergebenden Spalt 22 zwischen der Dichtung 23 und dem Zylinderboden 9.

Erst wenn beide Betätigungselemente 15, 30 auf Durchlass geschaltet sind, wird damit die volle Funktionsfähigkeit des Schnellspannzylinders und seine Spanneinrichtung festgestellt und kann als Funktionsmeldung einer übergeordneten Steuerung mitgeteilt werden.

Die Erfindung ist nicht darauf beschränkt, dass zur Überwachung der Kontrollfunktion beide Betätigungselemente 15, 20 auf Durchlass geschaltet sind.

In einer anderen Ausgestaltung der Überwachungseinrichtung kann es auch vorgesehen sein, dass der zu überwachende Zustand von zwei separaten Kontrollleitungen hergestellt wird, so dass jedes Betätigungselement separat für sich an einer separaten Kontrollleitung sitzt und dort überwacht wird.

Ferner ist es an einer Weiterbildung der vorliegenden Erfindung nicht Iösungsnotwendig, dass der Sicherheitszustand (eingefahrener Einzugsnippel oder verriegelter Einzugsnippel) durch die Offenstellung der Betätigungselemente 15, 30 gekennzeichnet wird. Es kann auch vorgesehen sein, dass die Schließstellung der Betätigungselemente und das Blocken des Durchflusses eines Kontrollmediums als überwachter Status angesehen werden.

In einer Weiterbildung der vorliegenden Erfindung ist es vorgesehen, dass wahlweise entweder das erste Betätigungselement als Annäherungsschalter ausgebildet ist, d. h. elektromechanisch, induktiv oder kapazitiv ausgebildet und berührungsfrei oder berührend betätigt wird und / oder auch das zweite Betätigungselement 30 elektromechanisch, induktiv oder kapazitiv ausgebildet und berührungsfrei oder berührend betätigbar ausgebildet ist.

Es ist also nicht lösungsnotwendig, die beiden Betätigungselemente 15, 30 als Hydraulikventile auszubilden. In einer anderen Ausgestaltung kann es vorgesehen sein, diese Betätigungselemente als Annäherungsschalter auszubilden.

Solche Annäherungsschalter können entweder berührungslos arbeiten, oder sie können auch berührend als Schalter arbeiten.

Deshalb liegt es auch im Bereich der vorliegenden Erfindung, an der Bodenseite des Einzugsnippels eine entsprechende Schaltnocke anzubringen oder die Bodenseite des Einzugsnippels selbst als Schaltnocke auszubilden, die berührend oder nicht berührend einen darunter angeordneten elektrischen oder elektromagnetischen Schalter betätigt.

Die vorliegende Erfindung sieht also die Anwesenheit des ersten Betätigungselements oder Kontrollschalters vor und die Anwesenheit des zweiten Betätigungselements oder Kontrollschalters.

Ferner sieht es in einer Variante vor, dass nur das erste Betätigungselement oder der erste Kontrollschalter vorhanden ist, während das zweite Betätigungselement oder der Kontrollschalter entfällt.

In einer dritten Variante ist nur das zweite Betätigungselement oder Kontrollschalter vorhanden, während das erste Betätigungselement oder der erste Kontrollschalter entfällt.

In allen genannten Ausführungsbeispielen ist eine beliebige Kombination von Ventilen und Schaltern untereinander möglich.

So kann beispielsweise das erste Betätigungselement als Schalter und das zweite Betätigungselement als Ventil ausgebildet werden, ebenso wie umgekehrt das erste Betätigungselement als Ventil und das zweite Betätigungselement als Schalter ausgebildet werden.

Ebenso ist es bei der Serienschaltung dieser beiden Betätigungselemente oder Schalter nicht lösungsnotwendig, dass das Kontrollmedium von rechts nach links fließt, wie es im Ausführungsbeispiel dargestellt ist, sondern es ist auch ein umgekehrter Fluss möglich. Demzufolge kann es auch vorgesehen sein, dass das zweite Betätigungselement stromab des ersten Betätigungselements angeordnet ist.

### Zeichnungslegende

- 1:
- 2: Fangschraube
- 3: Einzugsnippel
- 4: Deckel
- 5: Verriegelungskörper
- 6: Verriegelungskolben
- 7: Kugelauflage
- 8: Federpaket
- 9: Zylinderboden
- 10: Gehäuse (Maschinentisch)
- 11: Einbaubohrung
- 12: Federraum
- 13: Druckraum
- 14: Druckanschluss
- 15: Betätigungselement (für Verriegelungskolben 6)
- 16:
- 17: Kontrollanschluss
- 18: Kontrollbohrung 18a
- 19: Führungsfuß
- 20: Durchlass
- 21: Querbohrung
- 22: Spalt
- 23: Dichtung
- 24: Kontrollbohrung
- 25: Pfeilrichtung
- 26: Kontrollauslass
- 27: Obere Dichtung
- 28: Ventilstößel
- 29: Trenndichtung
- 30: Betätigungselement (für Nippel 3)
- 31: Ventilstößel
- 32: Federraum
- 33: Druckfeder
- 34: Zylinderbuchse
- 35: Dichtung
- 36: Dichtung
- 37: Anfasung
- 38: Verbindungskanal
- 39: Ringnut
- 40: Verteilerbohrungen
- 41: Steignut
- 42: Betätigungsfläche
- 43: Anschlagfläche

## Patentansprüche

1. Schnellspannzylinder mit Kontrolle der Funktion des Einzugsnippels beim Einspannen des Einzugsnippels (3) im Schnellspannzylinder, umfassend ein Gehäuse (10) und einen das Gehäuse (10) abdeckenden Deckel (4), welcher eine zentrale Ausnehmung zur Aufnahme des an der Unterseite einer Werkstückpalette (1) angeordneten Einzugsnippels (3) aufweist, wobei im Gehäuse (10) eine federbelastete Verriegelung des Einzugsnippels (3) mittels mehrerer Verriegelungskörper (5) erfolgt und eine Entriegelung mittels Verschiebung eines druckmittelbetätigten Kolbens (6) erfolgt,
**dadurch gekennzeichnet,**
**dass** ein Betätigungselement (30) die Anwesenheit und den Verschiebungszustand des Einzugsnippels (2, 3) im Gehäuse des Schnellspannzylinders erfasst,
wobei das Betätigungselement (30) aus einem etwa hülsenförmigen Ventilstößel (31) besteht, der federbelastet vom Einzugsnippel (2, 3) betätigbar ist und dessen Verschiebungsweg den Durchlass für ein Kontrollmedium steuert.

2. Schnellspannzylinder nach Anspruch 1, **dadurch gekennzeichnet, dass** das Betätigungselement (30) als fluidisches Kontrollventil ausgebildet ist.

3. Schnellspannzylinder nach Anspruch 2, **dadurch gekennzeichnet, dass** das Betätigungselement (30) einen Fluidstrom eines Drucköls überwacht.

4. Schnellspannzylinder nach Anspruch 1, **dadurch gekennzeichnet, dass** das Betätigungselement als wegeabhängig betätigbarer Schalter ausgebildet ist.

5. Schnellspannzylinder nach einem der Ansprüche 1 bis 4, **dadurch gekennzeichnet, dass** das Betätigungselement (30) federbelastet verschiebbar von dem Einzugsnippel (2) betätigt wird, wenn der Einzugsnippel (2) in das Gehäuse (10) des Schnellspannzylinders eingefahren und mit den Verriegelungskörpern (5) verrastet ist.

6. Schnellspannzylinder nach einem der Ansprüche 1 bis 5, **dadurch gekennzeichnet, dass** das Betätigungselement (30) erfasst, ob der Einzugsnippel (2, 3) in seiner Verriegelungsposition in das Gehäuse des Schnellspannzylinders eingefahren ist.

7. Schnellspannzylinder nach einem der Ansprüche 1 bis 6, **dadurch gekennzeichnet, dass** der Ventilstößel (31) des Kontrollventils (30) einen Federraum (32) ausbildet, in dessen Innenraum eine Druckfeder (33) angeordnet ist, die sich mit ihrem einen Ende am Gehäuse (10) des Maschinentisches und mit ihrem anderen Ende an der Oberseite des Federraums (32) abstützt.

## Claims

1. Quick-action clamping cylinder with monitoring of the function of the draw-in nipple during clamping of the draw-in nipple (3) in the quick-action clamping cylinder, comprising a housing (10) and a cover (4), which covers the housing (10) and has a central recess to receive the draw-in nipple (3) arranged on the underside of a workpiece pallet (1), wherein in the housing (10) a spring-loaded locking of the draw-in nipple (3) occurs by means of multiple locking bodies (5) and an unlocking occurs by means of displacement of a pressure medium-actuated piston (6),
**characterised in that**
an actuating element (30) detects the presence and the displacement status of the draw-in nipple (2, 3) in the housing of the quick-action clamping cylinder,
wherein the actuating element (30) consists of a generally sleeve-like valve stem (31), which can be actuated in a spring-loaded manner by the draw-in nipple (2, 3) and the displacement path of which controls the passage for a control medium.

2. Quick-action clamping cylinder according to claim 1, **characterised in that** the actuating element (30) is configured as a fluidic control valve.

3. Quick-action clamping cylinder according to claim 2, **characterised in that** the actuating element (30) monitors a fluid flow of a pressure oil.

4. Quick-action clamping cylinder according to claim 1, **characterised in that** the actuating element is configured as a switch, which can be actuated in a path-dependent manner.

5. Quick-action clamping cylinder according to one of claims 1 to 4, **characterised in that** the actuating element (30) is actuated displaceably in a spring-loaded manner by the draw-in nipple (2) when the draw-in nipple (2) is retracted into the housing (10) of the quick-action clamping cylinder and is locked with the locking bodies (5).

6. Quick-action clamping cylinder according to one of claims 1 to 5, **characterised in that** the actuating element (30) detects whether the draw-in nipple (2, 3) is retracted into the housing of the quick-action clamping cylinder in its locking position.

7. Quick-action clamping cylinder according to one of claims 1 to 6, **characterised in that** the valve stem (31) of the control valve (30) forms a spring chamber (32) having a pressure spring (33) arranged in its interior, which pressure spring is braced at its one end on the housing (10) of the machine table and at its other end on the upper side of the spring chamber (32).

## Revendications

1. Cylindre à serrage rapide avec contrôle de la fonction du raccord d'entrée au moment de la fixation du raccord d'entrée (3) dans le cylindre à serrage rapide, comprenant un boîtier (10) et un couvercle (4), qui recouvre le boîtier (10) et qui comporte un évidement central destiné à recevoir le raccord d'entrée (3) disposé sur la face inférieure d'une palette de pièces (1), le raccord d'entrée (3) étant bloqué dans le boîtier (10) sous l'effet de la force d'un ressort au moyen de plusieurs corps de verrouillage (5) et étant débloqué sous l'effet du déplacement d'un piston (6) actionné par un fluide sous pression,
**caractérisé en ce que**
un élément d'actionnement (30) détecte la présence et l'état de déplacement du raccord d'entrée (2, 3) dans le boîtier du cylindre à serrage rapide,
l'élément d'actionnement (30) étant constitué d'un poussoir de soupape (31) sensiblement en forme de manchon, lequel est propre à être actionné sous l'effet de la force d'un ressort par le raccord d'entrée (2, 3) et dont la course de déplacement commande le passage d'un fluide de contrôle.

2. Cylindre à serrage rapide selon la revendication 1, **caractérisé en ce que** l'élément d'actionnement (30) est réalisé sous la forme d'une soupape de contrôle fluidique.

3. Cylindre à serrage rapide selon la revendication 2, **caractérisé en ce que** l'élément d'actionnement (30) contrôle un flux d'une huile sous pression.

4. Cylindre à serrage rapide selon la revendication 1, **caractérisé en ce que** l'élément d'actionnement est réalisé sous la forme d'un commutateur actionnable en fonction de la course.

5. Cylindre à serrage rapide selon l'une quelconque des revendications 1 à 4, **caractérisé en ce que** l'élément d'actionnement (30) est actionné par le raccord d'entrée (2) de manière à pouvoir se déplacer sous l'effet de la force d'un ressort, lorsque le raccord d'entrée (2) est engagé dans le boîtier (10) du cylindre à serrage rapide et est bloqué par les corps de verrouillage (5).

6. Cylindre à serrage rapide selon l'une quelconque des revendications 1 à 5, **caractérisé en ce que** l'élément d'actionnement (30) détecte si le raccord d'entrée (2, 3), dans sa position de blocage, est engagé dans le boîtier du cylindre à serrage rapide.

7. Cylindre à serrage rapide selon l'une quelconque des revendications 1 à 6, **caractérisé en ce que** le poussoir (31) de la soupape de contrôle (30) forme un logement pour ressort (32) à l'intérieur duquel est logé un ressort de pression (33), dont une extrémité prend appui sur le boîtier (10) du plateau de la machine et dont l'autre extrémité prend appui sur la face supérieure du logement pour ressort (32).
